(19) Europäisches Patentamt
European Patent Office
Office européen des brevets

(11) Veröffentlichungsnummer: **0 426 618 A1**

(12) **EUROPÄISCHE PATENTANMELDUNG**

(21) Anmeldenummer: **90810814.5**

(51) Int. Cl.5: **C09B 62/085**, D06P 1/382

(22) Anmeldetag: **23.10.90**

(30) Priorität: **01.11.89 CH 3941/89**

(43) Veröffentlichungstag der Anmeldung:
**08.05.91 Patentblatt 91/19**

(84) Benannte Vertragsstaaten:
**BE CH DE ES FR GB IT LI**

(71) Anmelder: **CIBA-GEIGY AG**
**Klybeckstrasse 141**
**CH-4002 Basel(CH)**

(72) Erfinder: **Tzikas, Anthanassios, Dr.**
**Unt. Rütschetenweg 36**
**CH-4133 Pratteln(CH)**
Erfinder: **Lauk, Urs, Dr.**
**In der Ey 39**
**CH-8047 Zürich(CH)**

(54) **Reaktivfarbstoffe, Verfahren zu deren Herstellung und deren Verwendung.**

(57) Neue Reaktivfarbstoffe der Formel

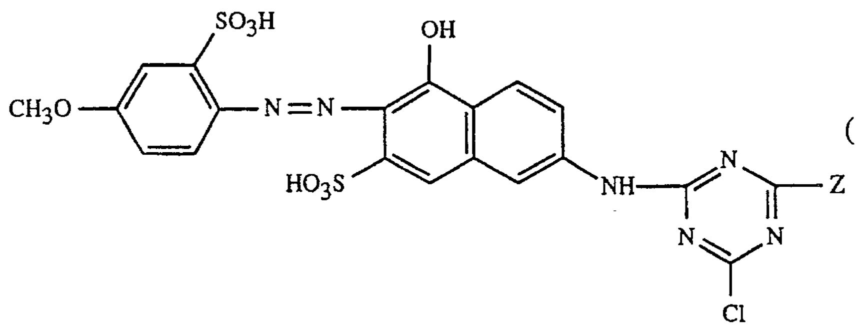

(1),

worin Z ein Rest der Formel

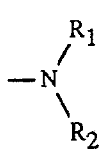

(1a),

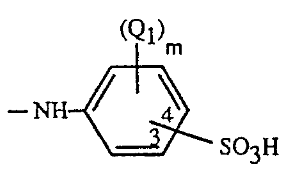

(1b),

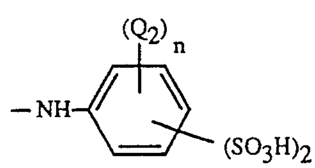

(1c)

oder

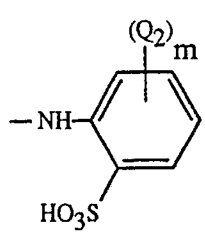

(1d)

EP 0 426 618 A1

ist, worin $R_1$ und $R_2$ unabhängig voneinander Wasserstoff oder $C_1$-$C_6$-Alkyl, das durch $C_1$-$C_4$-Alkoxy, Hydroxy-$C_1$-$C_4$-alkoxy, HO-$(CH_2CH_2$-$O)_{2-4}$-, $C_1$-$C_4$-Alkoxy-carbonyl, $C_2$-$C_4$-Alkanoyloxy, Carboxy, Cyan, Chlor, Sulfo oder Sulfato substituiert sein kann, n die Zahl 0, 1 oder 2 und m die Zahl 1 oder 2 ist, $(Q_1)_m$ für 1 oder 2 Substituenten $Q_1$ unabhängig voneinander aus der Gruppe $C_1$-$C_4$-Alkyl, $C_1$-$C_4$-Alkoxy, Acetylamino und Carboxy steht, $(Q_2)_n$ für 0 bis 2 Substituenten $Q_2$ und $(Q_2)_m$ für 1 oder 2 Substituenten $Q_2$ unabhängig voneinander aus der Gruppe $C_1$-$C_4$-Alkyl, $C_1$-$C_4$-Alkoxy, Acetylamino, Halogen und Carboxy steht, und die Sulfogruppe im Rest der Formel (1b) in 3- oder 4-Stellung an den Benzring gebunden ist, geben auf Cellulosefasern farbstarke scharlachrote Färbungen und Drucke mit guten Echtheiten.

## REAKTIVFARBSTOFFE, VERFAHREN ZU DEREN HERSTELLUNG UND DEREN VERWENDUNG

Reaktivfarbstoffe werden in grossem Umfange für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in Bezug auf Eignung für bestimmte Färbeverfahren und Echtheitsniveau der Färbungen, vielfach noch nicht voll befriedigen.

Die Aufgabe der vorliegenden Erfindung ist es, neue Reaktivfarbstoffe zu finden; die für Färbe- und Druckverfahren geeignet sind und die einen hohen Fixiergrad und zugleich eine gute Auswaschbarkeit der nichtfixierten Anteile haben; ferner sollen die Farbstoffe allgemein gute Echtheiten und insbesondere einen Farbton im Rotbereich besitzen. Es hat sich gezeigt, dass die weiter unten definierten neuen Farbstoffe die gestellte Aufgabe weitgehend erfüllen.

Gegenstand der Erfindung sind daher Reaktivfarbstoffe der Formel

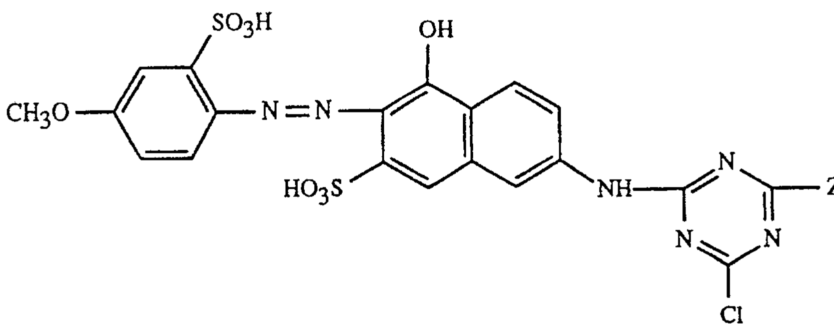

(1),

worin Z ein Rest der Formel

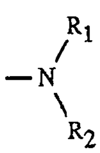 (1a), 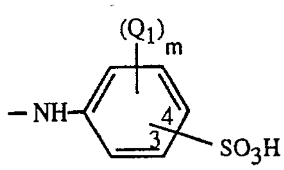 (1b), 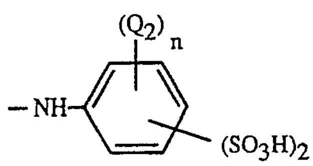 (1c)

oder 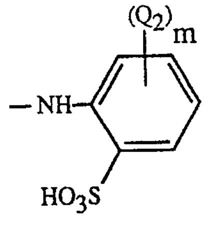 (1d)

ist, worin $R_1$ und $R_2$ unabhängig voneinander Wasserstoff oder $C_1$-$C_6$-Alkyl, das durch $C_1$-$C_4$-Alkoxy, Hydroxy-$C_1$-$C_4$-alkoxy, HO-$(CH_2CH_2$-$O)_{2-4}$-, $C_1$-$C_4$-Alkoxy-carbonyl, $C_2$-$C_4$-Alkanoyloxy, Carboxy, Cyan, Chlor, Sulfo oder Sulfato substituiert sein kann, n die Zahl 0, 1 oder 2 und m die Zahl 1 oder 2 ist, $(Q_1)_m$ für 1 oder 2 Substituenten $Q_1$ unabhängig voneinander aus der Gruppe $C_1$-$C_4$-Alkyl, $C_1$-$C_4$-Alkoxy, Acetylamino und Carboxy steht, $(Q_2)_n$ für 0 bis 2 Substituenten $Q_2$ und $(Q_2)_m$ für 1 oder 2 Substituenten $Q_2$ unabhängig voneinander aus der Gruppe $C_1$-$C_4$-Alkyl, $C_1$-$C_4$-Alkoxy, Acetylamino, Halogen und Carboxy steht, und die Sulfogruppe im Rest der Formel (1b) in 3- oder 4-Stellung an den Benzring gebunden ist.

Bedeuten $R_1$ und $R_2$ $C_1$-$C_6$-Alkyl so kommen z.B. Methyl, Aethyl, Isopropyl, n-Propyl, n-Butyl, sek.-Butyl, Isobutyl, tert.-Butyl, n-Pentyl oder n-Hexyl in Betracht, wobei die genannten Reste wie angegeben substituiert sein können, wobei als $C_1$-$C_4$-Alkoxy z.B. Methoxy, Aethoxy, Isopropoxy, n-Propoxy und n-Butoxy; als Hydroxy-$C_1$-$C_4$-alkoxy z.B. $\beta$-Hydroxyäthoxy, $\beta$-Hydroxypropoxy und $\gamma$-Hydroxypropoxy; als $C_1$-

$C_4$-Alkoxycarbonyl z.B. Methoxycarbonyl und Aethoxycarbonyl; als $C_2$-$C_4$-Alkanoyloxy z.B. Acetyloxy und Propionyloxy; und als HO-$(CH_2CH_2$-$O)_{2-4}$- z.B. HO-$(CH_2CH_2$-$O)_2$-, HO-$(CH_2CH_2$-$O)_3$- und HO-$(CH_2CH_2$-$O)_4$- in Betracht kommen.

Bedeutet $Q_1$ oder $Q_2$ $C_1$-$C_4$-Alkyl so kommt Methyl, Aethyl, Isopropyl, n-Propyl, sek.-Butyl, Isobutyl, tert.-Butyl und n-Butyl in Betracht.

Bedeutet $Q_1$ oder $Q_2$ $C_1$-$C_4$-Alkoxy so kommt Methoxy, Aethoxy, Isopropoxy, n-Propoxy, sek.-Butoxy, Isobutoxy, tert.-Butoxy und n-Butoxy in Betracht.

Bedeutet $Q_2$ Halogen so kommt z.B. Fluor, Brom und insbesondere Chlor in Betracht.

Bevorzugt sind Reaktivfarbstoffe der Formel (1), worin Z ein Rest der Formel (1a) ist, und $R_1$ und $R_2$ unabhängig voneinander Wasserstoff oder $C_1$-$C_4$-Alkyl, das durch $C_1$-$C_4$-Alkoxy, Hydroxy-$C_2$-$C_4$-alkoxy, Sulfo oder Sulfato substituiert sein kann, ist.

Ebenfalls bevorzugt sind Reaktivfarbstoffe der Formel (1), worin Z ein Rest der Formel (1b) ist, m die Zahl 1 bedeutet, und $Q_1$ Methyl, Methoxy, Acetylamino oder Carboxy ist.

Ferner sind Reaktivfarbstoffe der Formel (1) bevorzugt, worin Z ein Rest der Formel (1c) ist, n die Zahl 0 oder 1 bedeutet, und $Q_2$ Methyl, Methoxy, Acetylamino, Chlor oder Carboxy ist.

Bevorzugt sind ferner Reaktivfarbstoffe der Formel (1), worin Z ein Rest der Formel (1d) ist, m die Zahl 1 oder 2 bedeutet, und $Q_2$ Methyl, Methoxy, Acetylamino, Chlor oder Carboxy ist.

Besonders bevorzugt sind Reaktivfarbstoffe der Formel (1) worin Z β-Sulfoäthylamino, N-Methyl-β-sulfoäthylamino, β-(β′-Hydroxyäthoxy)äthylamino, N-Methyl-β-(β′-hydroxyäthoxy)äthylamino, β-Sulfatoäthylamino, N-Methyl-β-sulfatoäthylamino, -$NH_2$, Methylamino, Aethylamino, N,N-Dimethylamino, N,N-Diäthylamino, n-Propylamino, Isopropylamino, n-Butylamino, 2,4-Disulfoanilino, 2,5-Disulfoanilino, 2-Methoxy-4-sulfoanilino, 2-Methyl-5-sulfoanilino, 2-Sulfo-5-chloranilino, 3-Sulfo-4-methoxyanilino, 2-Methyl-4-sulfoanilino, 3-Sulfo-4-methylanilino oder 2,4-Dimethyl-6-sulfoanilino ist.

Ganz besonders bevorzugt sind Reaktivfarbstoffe der Formel (1), worin Z ein Rest der Formel -$NHCH_2CH_2SO_3H$ oder -$N(CH_3)CH_2CH_2SO_3H$ ist.

Ferner sind Reaktivfarbstoffe der Formel (1) ganz besonders bevorzugt, worin Z ein Rest der Formel

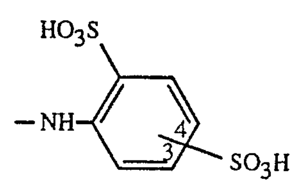

ist, und die Sulfogruppe in 3- oder 4-Stellung an den Benzring gebunden ist.

Die Farbstoffe der Formel (1) sind faserreaktiv, da sie im s-Triazinrest ein abspaltbares Chloratom enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man eine diazotierte Diazokomponente der Formel

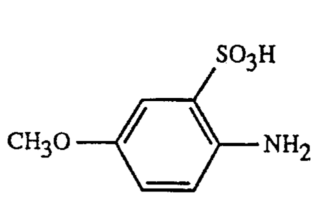

(2)

eine Kupplungskomponente der Formel

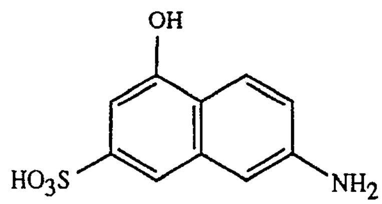

(3),

(bzw. die entsprechende N-Acetylaminoverbindung, die nach der Kupplung verseift wird), 2,4,6-Trichlor-s-triazin und ein Amin der Formel

H-Z (4),

worin Z die unter Formel (1) angegebene Bedeutung hat, durch Kupplung und Kondensation in beliebiger Reihenfolge zu einem Reaktivfarbstoff der Formel (1) umsetzt.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten frei gewählt werden kann.

Wichtige Ausführungsformen des erfindungsgemässen Verfahrens sind dadurch gekennzeichnet, dass man

1) eine diazotierte Aminoverbindung der Formel (2) mit einer Kupplungskomponente der Formel (3) (bzw. der entsprechenden N-Acetylaminoverbindung) zu einer Azoverbindung kuppelt, gegebenenfalls die N-Acetylgruppe durch Verseifung abspaltet, die Azover bindung mit 2,4,6-Trichlor-s-triazin kondensiert und das erhaltene primäre Kondensationsprodukt mit einer Aminoverbindung der Formel (4) zu einem Reaktivfarbstoff der Formel (1) kondensiert;

2) eine diazotierte Aminoverbindung der Formel (2) mit einer Kupplungskomponente der Formel (3) (bzw. der entsprechenden N-Acetylaminoverbindung) zu einer Azoverbindung kuppelt und gegebenenfalls die N-Acetylgruppe durch Verseifung abspaltet, dass man ferner 2,4,6-Trichlor-s-triazin mit einer Aminoverbindung der Formel (4) kondensiert und das erhaltene primäre Kondensationsprodukt mit der oben erwähnten Azoverbindung zu einem Reaktivfarbstoff der Formel (1) kondensiert;

3) eine Kupplungskomponente der Formel (3) mit 2,4,6-Trichlor-s-triazin kondensiert, das erhaltene primäre Kondensationsprodukt mit einer Aminoverbindung der Formel (4) kondensiert und das entstandene sekundäre Kondensationsprodukt mit einer diazotierten Aminoverbindung der Formel (2) zu einem Reaktivfarbstoff der Formel (1) kuppelt;

4) eine Kupplungskomponente der Formel (3) mit 2,4,6-Trichlor-s-triazin kondensiert, auf das erhaltene primäre Kondensationsprodukt eine diazotierte Aminoverbindung der Formel (2) kuppelt und die erhaltene Azoverbindung mit einer Aminoverbindung der Formel (4) zu einem Reaktivfarbstoff der Formel (1) kondensiert;

5) 2,4,6-Trichlor-s-triazin mit einer Aminoverbindung der Formel (4) kondensiert, das erhaltene primäre Kondensationsprodukt mit einer Kupplungskomponente der Formel (3) kondensiert und auf das entstandene sekundäre Kondensationsprodukt eine diazotierte Aminoverbindung der Formel (2) kuppelt, so dass ein Reaktivfarbstoff der Formel (1) erhalten wird.

Als Ausgangsstoffe, die zur Herstellung der Reaktivfarbstoffe der Formel (1) verwendet werden können, seien genannt:

Aminoverbindung der Formel (2), Diazokomponente

4-Methoxy-2-sulfoanilin.

Kupplungskomponente der Formel (3)

2-Amino-5-hydroxynaphthalin-7-sulfonsäure

2,4,6-Trichlor-s-triazin

Amine der Formel (4)

β-Sulfoäthylamin, N-Methyl-β-sulfoäthylamin, β-(β′-Hydroxyäthoxy)äthylamin, N-Methyl-β-(β′-hydroxyäthoxy)äthylamin, β-Sulfatoäthylamin, N-Methyl-β-sulfatoäthylamin, Ammoniak, Methylamin, Aethylamin, N,N-Dimethylamin, N,N-Diäthylamin, n-Propylamin, Isopropylamin, n-Butylamin, 2,4-Disulfoanilin, 2,5-Disulfoanilin, 2-Methoxy-4-sulfoanilin, 2-Methyl-5-sulfoanilin, 2-Sulfo-5-chloranilin, 3-Sulfo-4-methoxyanilin, 2-Methyl-4-sulfoanilin, 3-Sulfo-4-methylanilin oder 2,4-Dimethyl-6-sulfoanilin.

Die Diazotierung der Diazokomponenten erfolgt in der Regel durch Einwirkung salpetriger Säure in wässrig-mineralsaurer Lösung bei tiefer Temperatur, die Kupplung auf die Kupplungskomponenten bei schwach sauren, neutralen bis schwach alkalischen pH-Werten.

Die Kondensationen des 2,4,6-Trichlor-s-triazins mit den Aminomonoazoverbindungen und den Aminoverbindungen der Formel (4) erfolgen vorzugsweise in wässriger Lösung oder Suspension, bei niedriger Temperatur und bei schwach saurem, neutralem bis schwach alkalischem pH-Wert, so dass im fertigen Reaktivfarbstoff der Formel (1) noch ein Chloratom als abspaltbarer Rest übrig bleibt Vorteilhaft wird der bei der Kondensation freiwerdende Chlorwasserstoff laufend durch Zugabe wässriger Alkalihydroxide, -carbonate oder -bicarbonate neutralisiert. Auf eine Isolierung der Dichlortriazin-Azoverbindung wird im allgemeinen verzichtet.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Gegenstand der Erfindung sind ferner lagerstabile, konzentrierte flüssige Farbstoffpräpara tionen der Reaktivfarbstoffe der Formel (1) sowie ihre Verwendung zur Herstellung von Klotzflotten, Färbebädern und vor allem Druckpasten, die zum Färben und Bedrucken von Fasermaterialien, insbesondere cellulosehaltigen Fasermaterialien verwendet werden.

Flüssige Farbstoffpräparationen haben Vorteile gegenüber der Pulverform, z.B. keine Staubentwicklung beim Ansetzen von Druckpasten sowie von Klotz- und Färbeflotten, keine Benetzungsprobleme durch Klumpenbildung , keine fleckigen Färbungen durch ungelöste Farbstoffpartikel. Solche flüssige Formulierungen sollten hoch konzentriert (mindestens 10 Gew.-% und vorzugsweise mehr als 15 Gew.-% Farbstoffgehalt) und mindestens über mehrere Monate in einem breiten Temperaturbereich (-10 bis +40 °C) unverändert haltbar sein.

Als Ausgangslösung bzw. -suspension zur Herstellung der Farbstoffpräparationen kann man die direkt aus der Synthese erhaltene wässrige, gegebenenfalls Lösungsmittel enthaltende Lösung bzw. Suspension oder eine wässrige Anschlämmung der feuchten Press-oder Filterkuchen der Rohfarbstoffe von unterschiedlichem Gehalt an unerwünschten gelösten Stoffen mit niedrigem Molekulargewicht, besonders von bei der Synthese des Farbstoffes anfallenden Nebenprodukten und gelösten anorganischen und organischen Salzen verwenden. In Fällen, in denen das Kondensationsprodukt nicht oder nur äusserst mühsam aussalzbar ist, kann auch direkt die rohe Kondensations- bzw. Neutralisationslösung verwendet werden. Vorteilhaft verwendet man Ausgangslösungen bzw. -suspensionen, die 2 bis 50 % Farbstoff enthalten.

Man kann aber auch von dem trockenen Rohfarbstoffpulver ausgehen, wenn man es zunächst mit Wasser anschlämmt.

Bei den erfindungsgemässen, konzentrierten flüssigen Präparationen handelt es sich in der Regel um echte oder kolloidale Lösungen. Sie sind dünnflüssig (Viskosität von etwa 5 bis 300 cp/20 °C) und gut lagerstabil, d.h. sie bleiben mindestens mehrere Monate bei Temperaturen von -20 bis +60 °C, insbesondere -10 bis +40 °C in gebrauchsfähigem Zustand. Diese Präparationen können bei der Herstellung von Klotzflotten, Färbebädern und Druckpasten sowohl mit Wasser als auch mit organischen Lösungsmitteln und/oder Verdickungsmittel versetzt werden, ohne dass der Farbstoff ausfällt oder dass es zu anderen Inhomogenitäten kommt. Mit den genannten Klotzflotten, Färbebädern und Druckpasten kann man z.B. Textilmaterialien aus natürlichen oder synthetischen, insbesondere cellulose-haltigen Fasermaterialien in bekannter Weise färben oder bedrucken.

Die flüssigen Farbstoffpräparationen enthalten vorzugsweise 20 bis 50 Gewichtsprozent, insbesondere 35 bis 45 Gewichtsprozent des Farbstoffes der Formel (1).

Besonders geeignet sind die erfindungsgemässen stabilen konzentrierten flüssigen Farbstoffpräparationen zur Herstellung von Druckpasten für das Bedrucken von Cellulose-Fasermaterialien sowie für kontinuierliche Färbeverfahren..

Ein Verfahren zur Herstellung einer erfindungsgemässen flüssigen Präparation ist z.B. aus der EP-A-0 333 656 bekannt, worin auf einer Anlage für Umkehr-Osmose die Farbstofflösung entsalzt und aufkonzentriert wird.

Die Anwendung membrangebundener Filtriertechniken zur Herstellung von Zubereitungen wasserlöslicher organischer Farbstoffe ist bekannt. Das Verfahren geht von den wässrigen Suspensionen des Rohfarbstoffs aus, die mit Hilfe eines ersten Membrantrennverfahrens weitgehend von in Wasser löslichen Nebenprodukten befreit und deren Salzgehalt auf etwa die Hälfte verringert werden; dann folgt ein zweites Membrantrennverfahren.

In diesem ersten Membrantrennverfahren permeieren also die löslichen Nebenprodukte und ein Teil der

Salze durch ein Membran, während der Farbstoff und in Wasser unlösliche Anteile zurückgehalten werden.

In dem zweiten Membrantrennverfahren wird dann die Farbstoffsuspension - gegebenenfalls nach einer Verdünnung mit Wasser - entsalzt und aufkonzentriert und schliesslich in eine verkaufsfertige flüssige oder feste Farbstoffzubereitung übergeführt.

Die erfindungsgemäss eingesetzten Farbstofflösungen haben in der Regel einen Farbstoffgehalt von 5 bis 20 Gew.-% und einen Salzgehalt (anorganische Salze) von 1 bis 20 Gew.-%, insbesondere 1 bis 10 Gew.-%. Der pH-Wert liegt in der Regel im Bereich von 3 bis 10, vorzugsweise 3 bis 9. Unlösliche Anteile werden durch Mikrofiltration abgetrennt, die Aufkonzentrierung und Entsalzung wird so lange durchgeführt, bis ein Farbstoffgehalt von 10 bis 50 Gew.-% erreicht ist. Der Salzgehalt sinkt dabei unter 5 Gew.-%, z.B. 0,05 bis 5 Gew.-%, und vorzugsweise unter 1 Gew.-%, z.B. 0,05 bis 1 Gew.-%.

Zur Herstellung einer handelsfertigen Flüssigform ist die konzentrierte wässrige Farbstoff zubereitung gegebenenfalls nach Zugabe von den für Flüssigformulierungen üblichen Komponenten, wie Lösungsvermittlern, schaumdämpfenden Mitteln, Gefrierschutzmitteln, Feuchthaltemitteln, Tensiden, Puffersubstanzen und/oder Antimikrobika und Einstellen des pH-Wertes, nur noch durch Verdünnen und/oder mit Hilfe von Coupagemitteln auf einen vorgegebenen Endfarbstoffgehalt zu bringen. Die Farbstoffzubereitung kann aber auch, gegebenenfalls nach Zugabe von Zusätzen, wie Bindemitteln, Entstäubungsmitteln, Netzmitteln, Puffersubstanzen, wie Alkalipolyphosphaten, Dinatriumhydrogenphosphat, Zitronensäure und/oder Ethylendiamintetraessigsäure, und/oder Coupagemitteln, durch Wasserentzug, in ein festes Farbstoffpräparat übergeführt werden. Dank der erhöhten Farbstoffkonzentration benötigt man weniger Energie zum Trocknen. Man verwendet übliche Trocknungsverfahren, insbesondere die Sprühtrocknung.

Der pH-Wert der handelsfertigen Flüssigformulierung der Reaktivfarbstoffe wird in der Regel durch Zugabe von Puffersubstanzen eingestellt. Der pH-Wert liegt etwa im Bereich 7,0 bis 8,5, vorzugsweise 8,0.

Die genannten Hilfs- oder Zusatzmittel können der Farbstofflösung natürlich nicht nur vor deren endgültiger Formulierung als Handelsform zugesetzt, sondern bereits vor oder während des erfindungsgemässen Verfahrens in die Lösung des Rohfarbstoffs eingebracht werden und sind damit wenigstens teilweise bereits in der Farbstofflösung, aus der die endgültige handelsfertige Farbstoffformulierung hergestellt wird, vorhanden (z.B. Lösungsvermittler, Lösungsmittel, Tenside etc.). Eine Zugabe während des Verfahrens ist selbstverständlich nur dann sinnvoll, wenn das oder die Hilfs- oder Zusatzmittel nicht durch eines der Membrantrennverfahren wieder vollständig aus der Lösung entfernt werden.

Die erfindungsgemässen, konzentrierten flüssigen Präparationen der Reaktivfarbstoffe der Formel (1) enthalten somit 10 bis 50 Gewichtsprozent Farbstoff, 0,05 bis 5 Gewichtsprozent eines anorganischen Salzes, z.B. NaCl, KCl, LiCl, soviel Puffersubstanzen, z.B. Mono- und Dinatriumphosphat oder Natriumtripolyphosphat oder Mischungen von Puffersubstanzen, so dass ein pH-Wert zwischen 7,0 und 8,5 eingestellt werden kann, sowie Wasser.

Die Reaktivfarbstoffe der Formel (1) zeichnen sich durch hohe Reaktivität aus, und sie ergeben Färbungen mit guten Nass- und Lichtechtheiten. Besonders hervorzuheben ist es, dass die Farbstoffe eine gute Löslichkeit und hohe Farbstoff-Fixierung aufweisen, dass sie gut in der Cellulosefaser diffundieren, und dass sich die nichtfixierten Anteile leicht entfernen lassen.

Die erfindungsgemässen Farbstoffe der Formel (1) liegen entweder in der Form ihrer freien Säure oder vorzugsweise als deren Salze vor. Als Salze kommen beispielsweise Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die Reaktivfarbstoffe der Formel (1) eignen sich zum Färben und Bedrucken der verschiedensten Materialien, wie Seide, Leder, Wolle, Polyamidfasern und Polyurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung, fixiert werden.

Sie eignen sich vor allem zum Bedrucken von textilen cellulosehaltigen Fasermaterialien, insbesondere Baumwolle, ebenso aber auch zum Bedrucken von stickstoffhaltigen Fasern, z.B. von Wolle, Seide oder Wolle enthaltenden Mischgeweben. Sie eignen sich insbesondere für schonende Druckverfahren, wie z.B. mit Natriumpropionat als Fixieralkali.

Es empfiehlt sich, die Färbungen und Drucke einem gründlichen Spülen mit kaltem und heissem Wasser, gegebenenfalls unter Zusatz eines dispergierend wirkenden und die Diffusion der nichtfixierten Anteile fördernden Mittels, zu unterwerfen.

Bei der Anwendung in der Praxis werden die erfindungsgemässen Farbstoffe vorteilhaft als flüssige Färbe- oder Druckpräparate eingesetzt.

Die Herstellung der Monoazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1:

45,3 Teile des Aminoazofarbstoffes der Formel

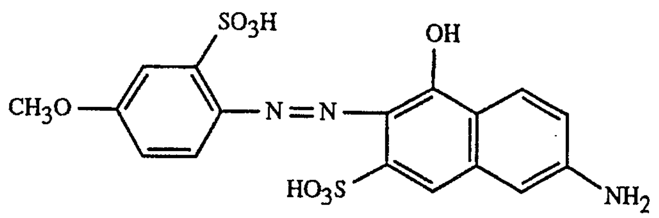

werden in Form des Dinatriumsalzes in 500 Teilen Wasser gelöst und durch Eiszugabe auf 5° gekühlt. Dazu gibt man eine Lösung von 18,5 Teilen Cyanurchlorid in 60 Teilen Aceton, wobei man durch allmähliche Zugabe einer verdünnten Natriumhydroxydlösung den pH-Wert des Reaktionsgemisches bei 6 bis 7 hält. Nach beendeter Kondensation werden 12,5 Teile Taurin zugegeben. Unter ständigem Abstumpfen der freiwerdenden Salzsäure und Erhöhung der Temperatur auf 30° wird ein pH-Wert von 6 bis 7 aufrechterhalten. Nach beendigter Reaktion wird der gebildete Reaktivfarbstoff ausgesalzen, abfiltriert und getrocknet. Er löst sich in Wasser mit scharlachroter Farbe und färbt Cellulosefasern nach dem Ausziehverfahren in Scharlachtönen von guten Nass- und Lichtechtheiten.

Der Farbstoff hat die Formel

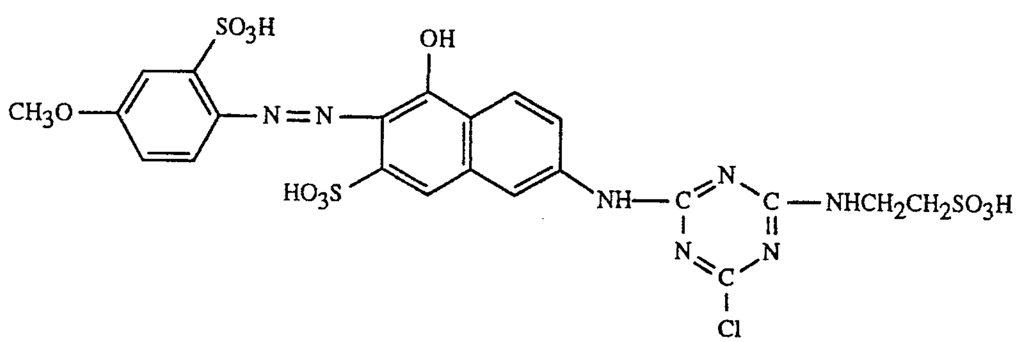

(101)

Weitere Farbstoffe, die Cellulosefasern in scharlachroten Tönen färben, werden nach dem angegebenen Verfahren erhalten, wenn anstelle von Taurin äquivalente Mengen der nachfolgend aufgeführten Amine verwendet werden.

| Beispiel No. | Amin | Farbton |
|---|---|---|
| 2 | N-Methyltaurin | |
| 3 | Aethanolamin | |
| 4 | 4-Methyl-2,5-disulfoanilin | |
| 5 | $H_2N-(CH_2CH_2-O)_2-CH_2CH_2-OH$ | |
| 6 | β-(β'-Hydroxyäthoxy)äthylamin | |
| 7 | N-Methyl-β-(β'-hydroxyäthoxy)äthylamin | |
| 8 | β-Sulfatoäthylamin | |
| 9 | N-Methyl-β-sulfatoäthylamin | |
| 10 | Ammoniak | |
| 11 | Methylamin | |
| 12 | Aethylamin | |
| 13 | N,N-Dimethylamin | |
| 14 | N,N-Diäthylamin | |
| 15 | n-Propylamin | |
| 16 | Isopropylamin | |
| 17 | n-Butylamin | |
| 18 | $H_2N-(CH_2CH_2-O)_3-CH_2CH_2-OH$ | |
| 19 | $H_2N-(CH_2CH_2-O)_4-CH_2CH_2-OH$ | |
| 20 | Anilin-2,4-disulfonsäure | |
| 21 | Anilin-2,5-disulfonsäure | |
| 22 | 2-Methoxy-4-sulfoanilin | |
| 23 | 2-Methyl-5-sulfoanilin | |
| 24 | 2-Sulfo-5-chloranilin | |
| 25 | 3-Sulfo-4-methoxyanilin | |
| 26 | 2-Methyl-4-sulfoanilin | |
| 27 | 3-Sulfo-4-methylanilin | |
| 28 | 2,4-Dimethyl-6-sulfoanilin | |

Färbevorschrift 1

2 Teile des gemäss Beispiel 1 erhaltenen Farbstoffes werden unter Zusatz von 5 bis 20 Teilen Harnstoff und 2 Teilen wasserfreies $Na_2CO_3$ in 100 Teilen Wasser bei 20 bis 50 °C gelöst. Mit der erhaltenen Lösung wird ein Baumwollgewebe imprägniert, so dass es um 60 bis 80 % seines Gewichtes zunimmt, und dann getrocknet. Danach wird während 1 1/2 bis 5 Minuten bei 140 bis 210 °C thermofixiert, dann während einer Viertelstunde in einer 0,1%-igen Lösung eines ionenfreien Waschmittels bei Siedetemperatur geseift, gespült und getrocknet.

Färbevorschrift 2

2 Teile des gemäss Beispiel 1 erhaltenen Farbstoffes werden in 2000 Teilen Wasser unter Zusatz von 120 Teilen NaCl oder wasserfreiem $Na_2SO_4$ bei 75 °C gelöst. Man geht mit 100 Teilen eines Baumwollgewebes in dieses Färbebad ein und hält die Temperatur während 30 bis 60 Minuten konstant. Danach werden 10 Teile wasserfreies $Na_2CO_3$ und 4 ml Natronlauge (30 %) zugegeben. Die Temperatur wird weitere 45 bis 60 Minuten bei 75 bis 80 °C gehalten, dann wird während 15 Minuten in einer 0,1%-igen Lösung eines ionenfreien Waschmittels bei Siedetemperatur geseift, gespült und getrocknet.

Färbevorschrift 3

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein

Baumwollgewebe imprägniert, so dass es um 75 % seines Gewichts zunimmt, und dann getrocknet. Danach imprägniert man das Gewebe mit einer 20 °C warmen Lösung, die pro Liter 5 g Natriumhydroxid und 300 g Natriumchlorid enthält, quetscht auf 75 % Gewichtszunahme ab, dämpft die Färbung während 30 Sekunden bei 100 bis 101 °C, spült, seift während einer Viertelstunde in einer 0,3%-igen Lösung eines ionenfreien Waschmittels bei Siedetemperatur, spült und trocknet.

Färbevorschrift 4

2 Teile des gemäss Beispiel 1 erhaltenen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60 °C, wobei nach 30 Minuten 40 Teile wasserfreies $Na_2CO_3$ und nochmals 60 Teile Natriumchlorid zugegeben werden. Man erhält die Temperatur 30 Minuten auf 60 °C, spült und seift dann die Färbung während 15 Minuten in einer 0,3%-igen Lösung eines ionenfreien Waschmittels bei Siedetemperatur, spült und trocknet.

Druckvorschrift 1

2 Teile des gemäss Beispiel 1 hergestellten Farbstoffes werden unter schnellem Rühren in 100 Teile einer Stammverdickung, enthaltend 45 Teile 5%-ige Natriumalginatverdickung, 32 Teile Wasser, 20 Teile Harnstoff, 1 Teil m-nitrobenzolsulfonsaures Natrium sowie 2 Teile Natriumcarbonat, eingestreut. Mit der so erhaltenen Druckpaste bedruckt man ein Baumwollgewebe auf einer Rouleauxdruckmaschine und dämpft den erhaltenen bedruckten Stoff 4 bis 8 Minuten bei 100 °C in gesättigtem Dampf. Das bedruckte Gewebe wird dann in kaltem und heissem Wasser gründlich gespült, wobei sich die nicht chemisch fixierten Anteile sehr leicht von der Faser entfernen lassen, und anschliessend getrocknet.

Druckvorschrift 2

6 Teile des Reaktivfarbstoffes der Formel (101) aus Beispiel 1 werden unter schnellem Rühren in 94 Teile einer Stammverdickung, enthaltend 50 Teile 5 prozentige Natriumalginat-Verdickung, 39,4 Teile Wasser, 3,5 Teile Natriumpropionat, 1 Teil m-nitrobenzolsulfonsaurecs Natrium sowie 0,1 Teil 40 prozentige wässrige Formaldehyd-Lösung, einge streut. Mit der so erhaltenen Druckpaste bedruckt man ein mercerisiertes Baumwollgewebe, trocknet und dämpft den erhaltenen bedruckten Stoff 8 Minuten bei 103 °C im Sattdampf. Das bedruckte Gewebe wird dann gespült und anschliessend getrocknet. Es wird ein roter Druck erhalten.

## Ansprüche

1. Reaktivfarbstoffe der Formel

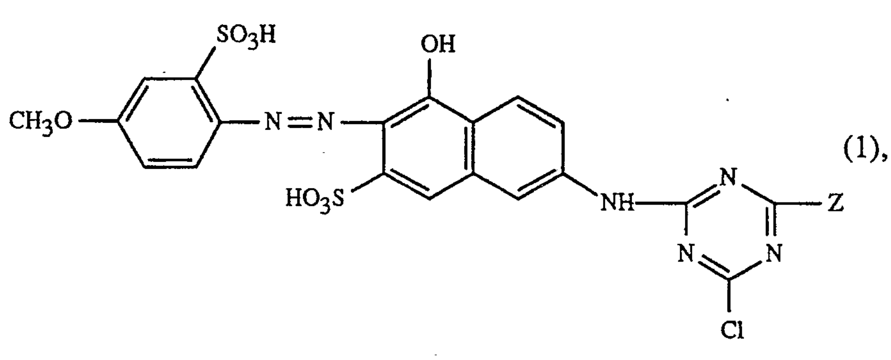

(1),

worin Z ein Rest der Formel

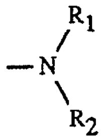 (1a), 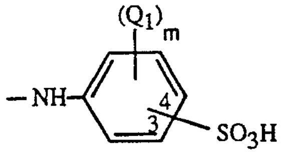 (1b), 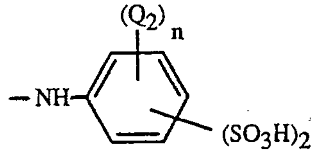 (1c)

oder 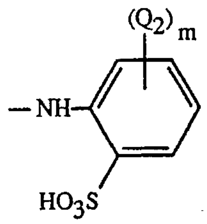 (1d)

ist, worin $R_1$ und $R_2$ unabhängig voneinander Wasserstoff oder $C_1$-$C_6$-Alkyl, das durch $C_1$-$C_4$-Alkoxy, Hydroxy-$C_1$-$C_4$-alkoxy, HO-$(CH_2CH_2\text{-}O)_{2-4}$-, $C_1$-$C_4$-Alkoxy-carbonyl, $C_2$-$C_4$-Alkanoyloxy, Carboxy, Cyan, Chlor, Sulfo oder Sulfato substituiert sein kann, n die Zahl 0, 1 oder 2 und m die Zahl 1 oder 2 ist, $(Q_1)_m$ für 1 oder 2 Substituenten $Q_1$ unabhängig voneinander aus der Gruppe $C_1$-$C_4$-Alkyl, $C_1$-$C_4$-Alkoxy, Acetylamino und Carboxy steht, $(Q_2)_n$ für 0 bis 2 Substituenten $Q_2$ und $(Q_2)_m$ für 1 oder 2 Substituenten $Q_2$ unabhängig voneinander aus der Gruppe $C_1$-$C_4$-Alkyl, $C_1$-$C_4$-Alkoxy, Acetylamino, Halogen und Carboxy steht, und die Sulfogruppe im Rest der Formel (1b) in 3- oder 4-Stellung an den Benzring gebunden ist.

2. Reaktivfarbstoffe gemäss Anspruch 1, worin Z ein Rest der Formel (1a) ist, und $R_1$ und $R_2$ unabhängig voneinander Wasserstoff oder $C_1$-$C_4$-Alkyl, das durch $C_1$-$C_4$-Alkoxy, Hydroxy-$C_2$-$C_4$-alkoxy, Sulfo oder Sulfato substituiert sein kann, ist.

3. Reaktivfarbstoffe gemäss Anspruch 1, worin Z ein Rest der Formel (1b) ist, m die Zahl 1 bedeutet, und $Q_1$ Methyl, Methoxy, Acetylamino oder Carboxy ist.

4. Reaktivfarbstoffe gemäss Anspruch 1, worin Z ein Rest der Formel (1c) ist, n die Zahl 0 oder 1 bedeutet, und $Q_2$ Methyl, Methoxy, Acetylamino, Chlor oder Carboxy ist.

5. Reaktivfarbstoffe gemäss Anspruch 1, worin Z ein Rest der Formel (1d) ist, m die Zahl 1 oder 2 bedeutet, und $Q_2$ Methyl, Methoxy, Acetylamino, Chlor oder Carboxy ist.

6. Reaktivfarbstoffe gemäss Anspruch 2, worin Z ein Rest der Formel $-NHCH_2CH_2SQ_3H$ oder $-N(CH_3)$-$CH_2CH_2SO_3H$ ist.

7. Reaktivfarbstoffe gemäss Anspruch 4, worin Z ein Rest der Formel

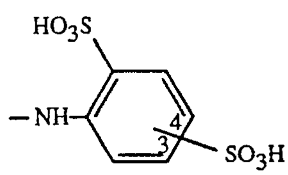

ist, und die Sulfogruppe in 3- oder 4-Stellung an den Benzring gebunden ist.

8. Reaktivfarbstoffe gemäss einem der Ansprüche 1 bis 5, worin Z β-Sulfoäthylamino, N-Methyl-β-sulfoäthylamino, β-(β′-Hydroxyäthoxy)äthylamino, N-Methyl-β-(β′-hydroxyäthoxy)äthylamino, β-Sulfatoäthylamino, N-Methyl-β-sulfatoäthylamino, $-NH_2$, Methylamino, Aethylamino, N,N-Dimethylamino, N,N-Diäthylamino, n-Propylamino, Isopropylamino, n-Butylamino, 2,4-Disulfoanilino, 2,5-Disulfoanilino, 2-Methoxy-4-sulfoanilino, 2-Methyl-5-sulfoanilino, 2-Sulfo-5-chloranilino, 3-Sulfo-4-methoxyanilino, 2-Methyl-4-sulfoanilino, 3-Sulfo-4-methylanilino oder 2,4-Dimethyl-6-sulfoanilino ist.

9. Verfahren zur Herstellung von Reaktivfarbstoffen der Formel (1) gemäss Anspruch 1, dadurch gekennzeichnet, dass man eine diazotierte Diazokomponente der Formel

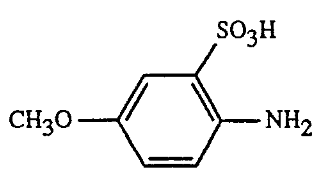 (2)

eine Kupplungskomponente der Formel

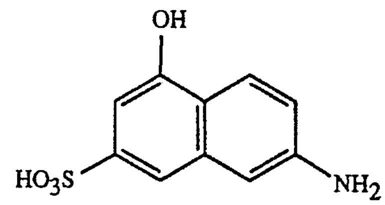

(3),

2,4,6-Trichlor-s-triazin und ein Amin der Formel
H-Z (4),
worin Z die unter Formel (1) angegebene Bedeutung hat, durch Kupplung und Kondensation in beliebiger Reihenfolge zu einem Reaktivfarbstoff der Formel (1) umsetzt.

10. Verwendung der Reaktivfarbstoffe gemäss Anspruch 1 zum Färben oder Bedrucken von textilen Fasermaterialien.

11. Verwendung gemäss Anspruch 10 zum Färben oder Bedrucken von Baumwolle.

12. Lagerstabile konzentrierte flüssige Farbstoffpräparationen von wasserlöslichen faserreaktiven Farbstoffen gemäss Anspruch 1.

Patentansprüche für folgenden Vertragsstaat: ES

1. Verfahren zur Herstellung der Reaktivfarbstoffe der Formel

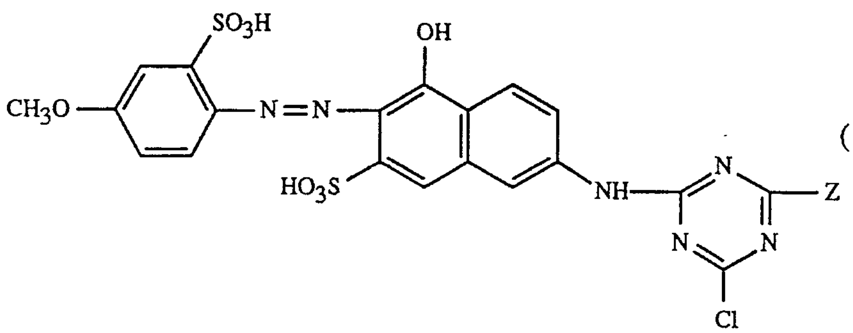

(1),

worin Z ein Rest der Formel

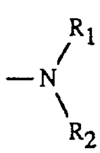

(1a),

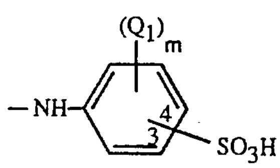

(1b),

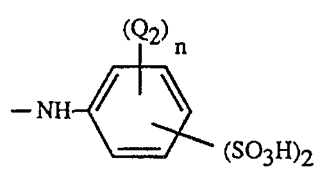

(1c)

oder

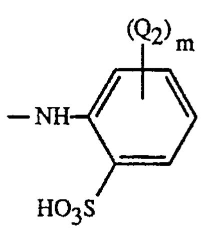

(1d)

ist, worin $R_1$ und $R_2$ unabhängig voneinander Wasserstoff oder $C_1$-$C_6$-Alkyl, das durch $C_1$-$C_4$-Alkoxy, Hydroxy-$C_1$-$C_4$-alkoxy, HO-$(CH_2CH_2$-$O)_{2-4}$-, $C_1$-$C_4$-Alkoxy-carbonyl, $C_2$-$C_4$-Alkanoyloxy, Carboxy, Cyan, Chlor, Sulfo oder Sulfato substituiert sein kann, n die Zahl 0, 1 oder 2 und m die Zahl 1 oder 2 ist, $(Q_1)_m$ für 1 oder 2 Substituenten $Q_1$ unabhängig voneinander aus der Gruppe $C_1$-$C_4$-Alkyl, $C_1$-$C_4$-Alkoxy, Acetylamino und Carboxy steht, $(Q_2)_n$ für 0 bis 2 Substituenten $Q_2$ und $(Q_2)_m$ für 1 oder 2 Substituenten $Q_2$

unabhängig voneinander aus der Gruppe $C_1$-$C_4$-Alkyl, $C_1$-$C_4$-Alkoxy, Acetylamino, Halogen und Carboxy steht, und die Sulfogruppe im Rest der Formel (1b) in 3- oder 4-Stellung an den Benzring gebunden ist, dadurch gekennzeichnet, dass man eine diazotierte Diazokomponente der Formel

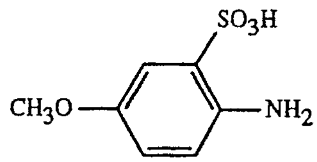

(2)

eine Kupplungskomponente der Formel

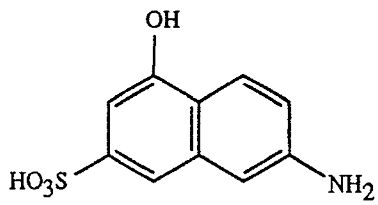

(3),

2,4,6-Trichlor-s-triazin und ein Amin der Formel

H-Z (4),

worin Z die unter Formel (1) angegebene Bedeutung hat, durch Kupplung und Kondensation in beliebiger Reihenfolge zu einem Reaktivfarbstoff der Formel (1) umsetzt.

2. Verfahren gemäss Anspruch 1, dadurch gekennzeichnet, dass man ein Amin der Formel (4) verwendet, worin Z ein Rest der Formel (1a) ist, und $R_1$ und $R_2$ unabhängig voneinander Wasserstoff oder $C_1$-$C_4$-Alkyl, das durch $C_1$-$C_4$-Alkoxy, Hydroxy-$C_2$-$C_4$-alkoxy, Sulfo oder Sulfato substituiert sein kann, ist.

3. Verfahren gemäss Anspruch 1, dadurch gekennzeichnet, dass man ein Amin der Formel (4) verwendet, worin Z ein Rest der Formel (1b) ist, m die Zahl 1 bedeutet, und $Q_1$ Methyl, Methoxy, Acetylamino oder Carboxy ist.

4. Verfahren gemäss Anspruch 1, dadurch gekennzeichnet, dass man ein Amin der Formel (4) verwendet, worin Z ein Rest der Formel (1c) ist, n die Zahl 0 oder 1 bedeutet, und $Q_2$ Methyl, Methoxy, Acetylamino, Chlor oder Carboxy ist.

5. Verfahren gemäss Anspruch 1, dadurch gekennzeichnet, dass man ein Amin der Formel (4) verwendet, worin Z ein Rest der Formel (1d) ist, m die Zahl 1 oder 2 bedeutet, und $Q_2$ Methyl, Methoxy, Acetylamino, Chlor oder Carboxy ist.

6. Verfahren gemäss Anspruch 2, dadurch gekennzeichnet, dass man ein Amin der Formel (4) verwendet, worin Z ein Rest der Formel $-NHCH_2CH_2SO_3H$ oder $-N(CH_3)CH_2CH_2SO_3H$ ist.

7. Verfahren gemäss Anspruch 4, dadurch gekennzeichnet, dass man ein Amin der Formel (4) verwendet, worin Z ein Rest der Formel

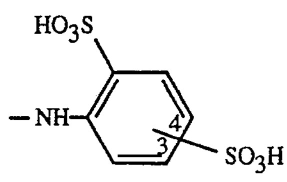

ist, und die Sulfogruppe in 3- oder 4-Stellung an den Benzring gebunden ist.

8. Verfahren gemäss einem der Ansprüche 1 bis 5, dadurch gekennzeichnet, dass man ein Amin der Formel (4) verwendet, worin Z β-Sulfoäthylamino, N-Methyl-β-sulfoäthylamino, β-(β′-Hydroxyäthoxy)-äthylamino, N-Methyl-β-(β′-hydroxyäthoxy)äthylamino, β-Sulfatoäthylamino, N-Methyl-β-sulfatoäthylamino, $-NH_2$, Methylamino, Aethylamino, N,N-Dimethylamino, N,N-Diäthylamino, n-Propylamino, Isopropylamino, n-Butylamino, 2,4-Disulfoanilino, 2,5-Disulfoanilino, 2-Methoxy-4-sulfoanilino, 2-Methyl-5-sulfoanilino, 2-Sulfo-5-chloranilino, 3-Sulfo-4-methoxyanilino, 2-Methyl-4-sulfoanilino, 3-Sulfo-4-methylanilino oder 2,4-Dimethyl-6-sulfoanilino ist.

9. Verwendung der gemäss Anspruch 1 erhältlichen Reaktivfarbstoffe zum Färben oder Bedrucken von

textilen Fasermaterialien.

10. Verwendung gemäss Anspruch 9 zum Färben oder Bedrucken von Baumwolle.

11. Lagerstabile konzentrierte flüssige Farbstoffpräparationen von gemäss Anspruch 1 erhältlichen wasserlöslichen faserreaktiven Farbstoffen.

Europäisches Patentamt

# EUROPÄISCHER RECHERCHENBERICHT

Nummer der Anmeldung

EP 90 81 0814

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CHEMICAL ABSTRACTS, Band 83, Nr. 26, 29. Dezember 1975, Seiten 77,78, Zusammenfassung Nr. 207560s, Columbus, Ohio, US; & JP-A-75 94 028 (SUMITOMO CHEMICAL CO., LTD) 26-07-1975 | 1,2,9-11 | C 09 B 62/085<br>D 06 P 1/382 |
| A | GB-A-2 029 853 (BAYER)<br>* Ansprüche 1,3,12,15; Seite 2, Zeilen 10-13 * | 1,2,6, 9-11 | |
| A | GB-A-2 030 168 (BAYER)<br>* Anspruch 1 * | 1,3,4,5, 9-11 | |

RECHERCHIERTE SACHGEBIETE (Int. Cl.5)

C 09 B

Der vorliegende Recherchenbericht wurde für alle Patentansprüche erstellt

| Recherchenort | Abschlußdatum der Recherche | Prüfer |
|---|---|---|
| Den Haag | 10 Dezember 90 | GINESTET M.E.J. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument